# EUROPEAN PATENT APPLICATION

(11) **EP 1 501 306 A1**
(43) Date of publication of application: **26.01.2005**
(21) Application number: 03725667.4
(22) Date of filing: 24.04.2003
(51) Int. Cl.: H04N 7/18, H04N 5/225, H04N 5/232

(54) **IMAGING APPARATUS, IMAGING SYSTEM, IMAGING APPARATUS CONTROL METHOD AND CONTROL PROGRAM, AND RECORDING MEDIUM IN WHICH THE SAME PROGRAM HAS BEEN RECORDED**

(30) Priority: 30.04.2002 JP 2002128799
(71) Applicant: Omron Corporation, Kyoto-shi, Kyoto 600-8530 (JP)
(72) Inventor: KANAYAMA, K., 801, Minamifudodo-cho, Kyoto-shi, Kyoto 600-8530 (JP); SUZUKI, Toshihiro, 801, Minamifudodo-cho, Kyoto-shi, Kyoto 600-8530 (JP)
(74) Representative: Calderbank, Thomas Roger
(86) International application number: PCT/JP2003/005307
(87) International publication number: WO 2003/094515

(57) **Abstract**

A camera (11) includes: a CMOS image sensor (12) which converts input light so as to obtain image data; a GPS/LPS section (21) or a non-contact ID-chip reading section (22), which detects the location of the camera itself; an operation restricting condition setting section (20) which determines whether or not the detected location is inside of a predetermined area; and an operation controlling section (17). If it is determined that the location of the camera itself is outside of the predetermined area, the operation controlling section (17) restricts the image pickup operation in the CMOS sensor (12).

## Description

### TECHNICAL FIELD

The present invention relates to an image pickup equipment for monitoring an area, an image pickup system, a method and program for controlling the image pickup equipment, and a storage medium storing the program.

### BACKGROUND ART

Image monitoring systems (image pickup systems) provide a monitoring/controlling service and other types of services, using data of images taken by cameras covering specific areas such as an office building, a store, and a house. Such image monitoring systems have rapidly become popular. An image monitoring system is made up of cameras set up on a plurality of places and a monitoring server for collectively managing these cameras. Sets of image information of images taken by the cameras are transmitted to the monitoring server via a communications network, and the monitoring server checks if an abnormal event occurs.

The scope of such a image monitoring system is remarkably wide. For instance, there is a system that adopts an animal (pet) type robot in which a camera is embedded, so as to monitor the inside of a house without making a dweller feel discomfort.

This conventional image monitoring system makes it possible to automatically pick up images of designated places by cameras being set up and perform monitoring through remotely-controlling the cameras. The system, however, has the following drawback.

If a camera being set up is carried away by an ill-motivated person or a child, not only the monitoring of the designated place becomes impossible but also the stolen camera may be abused for improper use such as sneak shot and other privacy infringing purposes. In particular, transportable cameras (e.g. cameras supporting wireless communications and power line communications) are significantly prone to the aforesaid theft and misuse.

This problem of the theft and misuse of the camera has obstructed the proliferation of the image monitoring system in the society, and hence has been a high-priority issue to be solved.

### DISCLOSURE OF INVENTION

The present invention was done to solve the above-described problem. The objective of the present invention is therefore to provide an image pickup equipment, an image pickup system, and a method of controlling the image pickup equipment, which can prevent improper use of a camera which is, for instance, stolen.

To achieve this objective, an image pickup equipment of the present invention is characterized by comprising: an image pickup section which converts input light so as to obtain image data; a self-location detecting section which detects a location of the image pickup equipment; a location determining section which determines whether or not the location detected by the self-location detecting section is inside of a predetermined area; and an image pickup operation restricting section which restricts an image pickup operation of the image pickup section when the location determining section determines that the location is outside of the predetermined area.

According to this arrangement, the image pickup section which converts input light so as to obtain image data is made up of, for instance, an optical system including a photoreceptor element such as a CCD (Charge Coupled Device) and a CMOS element, in addition to a lens and a signal processing system which subjects a signal obtained by the photoreceptor element to various conversion processes.

Any kind of devices can be adopted to the self-location detecting section, on condition that the self-location (location of the image pickup equipment) can be absolutely or relatively specified. Apart from various types of GPS (Global Positioning System) / LPS (Local Positioning system), an arrangement (field intensity measuring method) which detects the distance from a reference point by measuring the intensity of an wave (e.g. radio wave, supersonic wave, and infrared light) supplied from the reference point can be adopted.

The location determining section selectively determines whether or not the self-location (location of the image pickup equipment) is inside of a predetermined area, by comparing the self-location detected by the self-location detecting section with the predetermined area. The location determining section is implemented by various types of computing means and information processing means. The predetermined area is determined as, for instance, an area in the radius of R (meter) from a point A or at a latitude in a particular range and at a longitude in a particular range.

When the location determining section determines that the self-location is outside of the predetermined area, the image pickup operation restricting section restricts the image pickup operation of the image pickup section, by supplying an instruction signal and the like. The restriction of the image pickup operation can be performed in various ways. For instance, the image being picked up is caused not to be viewable, by not accepting the input from an image pickup button, locking the power supply to the image pickup equipment to the off state, performing a mosaic process, deleting (discarding) image data, and converting the image data to solid-black or solid-white image.

According to the arrangement above, the self-location detecting section detects the current location of the image pickup equipment, and the location determining section determines whether or not the self-location detected as above is inside of a predetermined area. If it is determined that the self-location is outside of the predetermined area, the image pickup operation restricting section restricts the image pickup operation of the image pickup section. For this reason, when the image pickup equipment is moved to the outside of the predetermined area, the image pickup operation carried out by the image pickup section of the image pickup equipment is restricted.

This makes it impossible to perform the image taking when the image pickup equipment is moved to the outside of an area where the image pickup equipment should be located, and hence it is possible to prevent improper use of the image pickup equipment such as sneak shot and other privacy infringing use, e.g. a photographic object which is not expected by the user (administrator) is shot by the image pickup equipment. Moreover, when stolen, the image pickup equipment is caused to be incapable of performing the image taking, and hence the risk of theft and improper use can be reduced.

Note that, the image pickup equipment is not limited to any particular construction. For instance, all components of the image pickup equipment may be integrally contained in a housing, or an image-pickup unit and a controller unit are individually provided, and the image-pickup unit and the controller unit are connected to each other via wireless communications, as in the case of a network camera.

An image pickup system of the present invention is characterized by comprising the image pickup equipment and a server computer which receives image information from the image pickup equipment.

According to this arrangement, in addition to the effects above, the information of an image picked up by the image pickup equipment can be used by a remote server computer.

A method of controlling the image pickup equipment of the present invention is characterized by comprising the steps of: (i) detecting a location of the image pickup equipment; (ii) determining whether or not the location detected in the step (i) is inside of a predetermined area; and (iii) if it is determined in the step (ii) that the location is outside of the predetermined area, restricting an image pickup operation of an image pickup section which is provided in the image pickup equipment and obtains image data by converting input light.

According to this arrangement, the image pickup section which converts input light so as to obtain image data is made up of, for instance, an optical system including a photoreceptor element such as a CCD (Charge Coupled Device) and a CMOS element, in addition to a lens and a signal processing system which subjects a signal obtained by the photoreceptor element to various conversion processes.

In the foregoing step (i), apart from various types of GPS (Global Positioning System) and LPS (Local Positioning System), the self-location (location of the image pickup equipment) is absolutely or relatively specified by a means which detects the distance from a reference point by measuring the intensity of an wave (e.g. radio wave, supersonic wave, and infrared light) supplied from the reference point.

In the step (ii), whether or not the self-location (location of the image pickup equipment) is inside of a predetermined area is selectively determined by comparing the self-location detected in the step (i) with the predetermined area. The predetermined area is determined as, for instance, an area in the radius of R (meter) from a point A, or an area at a latitude in a particular range and at a longitude in a particular range.

In the step (iii), when it is determined in the step (ii) that the self-location is outside of the predetermined area, the image pickup operation of the image pickup section is restricted by supplying an electrical signal and the like. The restriction of the image pickup operation can be performed in various ways. For instance, the image being picked up is caused not to be viewable, by not accepting the input from an image pickup button, locking the power supply to the image pickup equipment to the off state, performing a mosaic process, deleting (discarding) image data, and converting the image data to solid-black or solid-white image.

According to the method above, the current location of the image pickup equipment is detected in the step (i), and whether or not the detected self-location is inside of a predetermined area is determined in the step (ii). If it is determined in the step (ii) that the self-location is outside of the predetermined area, the image pickup operation of the image pickup section is restricted in the step (iii). For this reason, the image pickup operation of the image pickup section of the image pickup equipment is restricted if the image pickup equipment is moved to the outside of the predetermined area.

In this manner, the image taking is caused to be impossible if the image pickup equipment is moved to the outside of an area where the image pickup equipment should be set up, and hence, when the image pickup equipment is stolen, it is possible to prevent improper use of the image pickup equipment such as sneak shot and other privacy infringing use. Moreover, according to the method of the present invention, when stolen, the image pickup equipment is caused to be incapable of performing the image taking, and hence the risk of theft and improper use can be reduced.

A program for controlling an image pickup equipment of the present invention is a computer program which cases a computer to function as the aforesaid sections of the image pickup equipment.

According to this arrangement, the computer is caused to function as the sections of the image pickup equipment, and hence the image pickup equipment is implemented by the computer.

A computer-readable storage medium which stores the program for controlling the image pickup equipment of the present invention stores a control program that causes a computer to function as the sections of the image pickup equipment.

According to this arrangement, the control program read out from the storage medium makes it possible to implement the image pickup equipment by a computer.

For a fuller understanding of the nature and advantages of the invention, reference should be made to the ensuing detailed description taken in conjunction with the accompanying drawings.

### BRIEF DESCRIPTION OF DRAWINGS

Fig. 1 is a schematic diagram of a camera (image pickup equipment) of one embodiment of the present invention.
Fig. 2 is a schematic diagram of an image monitoring system (image pickup system) of the embodiment of the present invention.
Fig. 3 is a schematic diagram of a network camera (image pickup equipment) of the embodiment of the present invention.
Fig. 4 is a flowchart showing an example of the operation on such an occasion that the camera detects the location of its own.
Fig. 5 is a flowchart showing an example of the operation on such an occasion that an enquiry is made to an external positioning system, when the camera detects the location of its own.
Fig. 6 is a flowchart showing an example of the operations on such occasions that the camera utilizes a non-contact ID-chip method and a field intensity measuring method, for the detection of the location of its own.

### BEST MODE FOR CARRYING OUT THE INVENTION

One embodiment of the present invention is described below with reference to the attached drawings.

### [System Configuration]

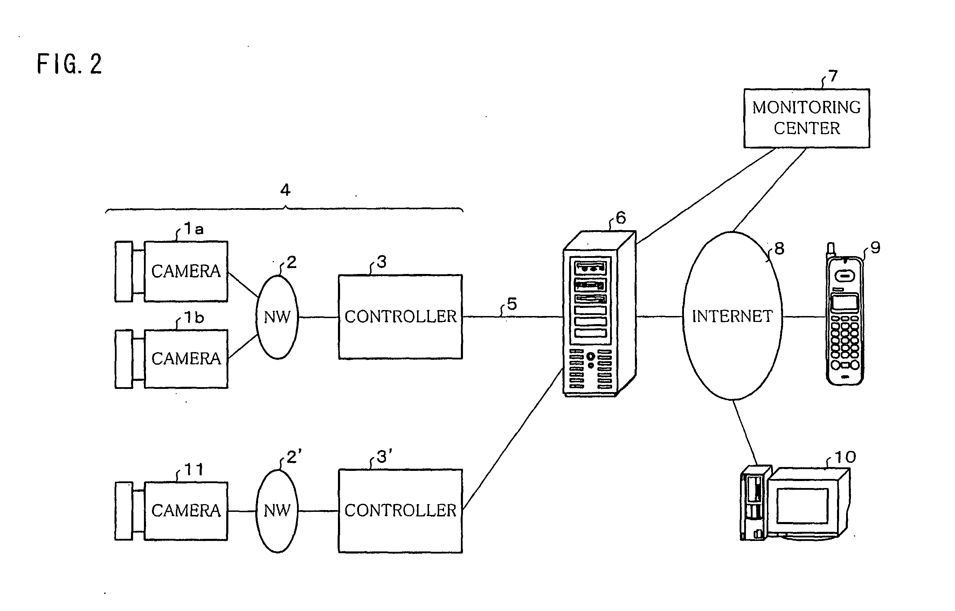

An image monitoring system (image pickup system) of the present embodiment is structured as illustrated in Fig. 2. That is, in this image monitoring system, a network camera (image pickup equipment) 4 including a plurality of cameras 1a, 1b, ... (hereinafter, collectively termed cameras 1), an image-pickup communications network (NW) 2, and controllers 3 is connected to a center (server computer) 6 through the intermediary of a communications network 5. As shown in the figure, one camera 11, an image-pickup communications network (NW) 2', and a controller 3' may be connected to the center 6, in place of the network camera 4.

The center 6 is connected to a monitoring center 7, via a circuit switched connection or the Internet 8. The center 6 is further connected to a mobile phone 9 and a personal computer 10 via the Internet 8. Note that, although Fig. 2 illustrates that only one network camera 4 is connected to the center 6, a plurality of network cameras 4 may be connected to the center 6.

The cameras 1 and the controller 3 can communicate each other over the image-pickup communications network 2. This image-pickup communications network 2 can be implemented by wired LAN (Local Area Network), wireless LAN, Bluetooth®, infrared communication, and the like. Taking the flexibility for the setup of the cameras 1 into consideration, wireless communication networks such as wireless LAN, Bluetooth®, and infrared communication are preferable.

The communications network 5 for connecting the controller 3 with the center 6 is implemented by, for instance, public networks such as a telephone network, the Internet, and a packet-switched network for mobile phones, or a wide-area private network.

As described below, each of the cameras 1 has functions for performing processes concerning image pickup. Such cameras 1 are set up on locations where images for monitoring are required to be taken up. The images taken by the cameras 1 are immediately transmitted to the controller 3 via the image-pickup communications network 2.

As specifically described later, the controller 3 controls the processes such as a conversion of image data supplied from the cameras 1. The controller 3 receives sets of images data from the cameras 1, and subjects these sets of image data to the conversion as occasion arises. Moreover, the controller 3 supplies the received sets of image data to the center 6 via the communication network 5 as appropriate. The controller 3 also has a function to give an order regarding the control of the image pickup operation in the cameras 1.

The center 6 centrally manages the image data supplied from the cameras 1 via the controller 3. The processes performed by the center 6 such as storing of the received image data, generating and routing an alarm on the occasion of the occurrence of an abnormal event, and ordering the controller 3 to perform the control.

As described above, the center 6 is, for instance, connected to the monitoring center (computer) 7 set up on a security company, via a circuit switched connection or the Internet 8. On this account, in reference to the information supplied from the center 6, the security company can keep track of the conditions of monitoring by the cameras 1, thereby being able to watch, for instance, an empty home.

An actual implementation of the aforesaid image monitoring system for an ordinary household is such that, for instance, the cameras 1 are set up on locations from which places such as the entrance, windows, garden, and porch can be monitored, and the controller 3 is set up on either a predetermined location such as a living room and entrance or a location from which the neighboring several households can be centrally monitored. With this system, the conditions of monitoring by the cameras 1 are controlled by the controller 3, and centrally managed from the center 6.

### [2. Configuration of Camera]

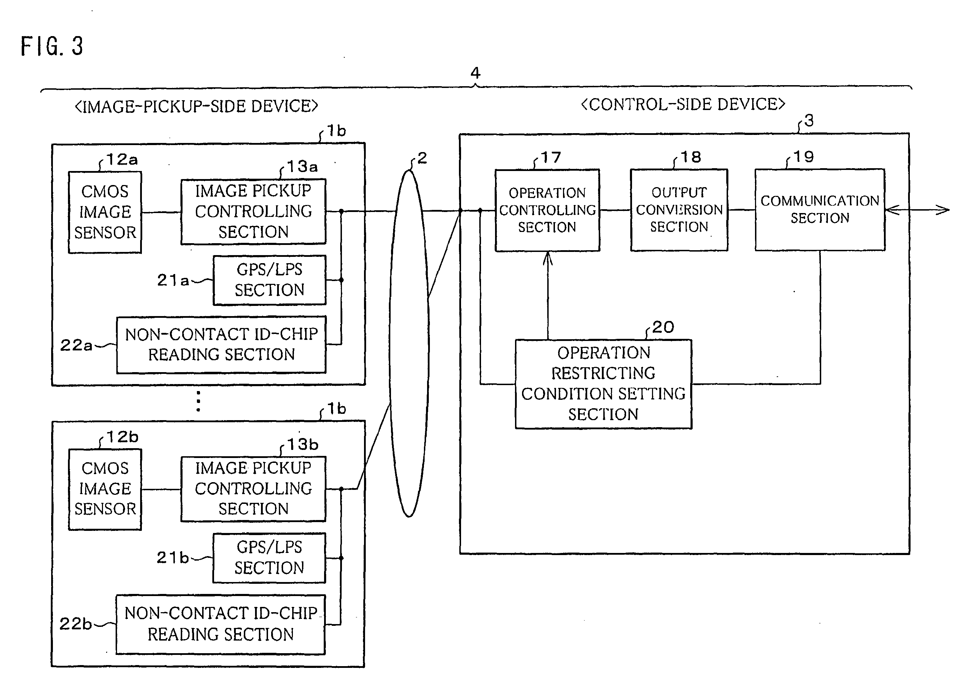

Next, the configuration of the network camera 4 is specifically described with reference to Fig. 3.

Fig. 3 is a block diagram showing the functional configuration of the cameras 1a and 1b and the controller 3 of which the network camera 4 is made up. As shown in the figure, the cameras 1a and 1b include CMOS image sensors (image pickup sections) 12a and 12b, image pickup controlling sections (image pickup sections) 13a and 13b, GPS (Global Positioning System) / LPS (Local Positioning System) sections (self-location detecting sections) 21a and 21b, and non-contact ID (Identification)-chip reading sections (self-location detecting sections) 22a and 22b, respectively.

The controller 3 connected to the cameras 1a and 1b via the image-pickup communications network 2 includes an operation controlling section (self-location determining section, image pickup operation restricting section) 17, an output conversion section (image pickup section) 18, a communication section (image pickup section) 19, and an operation restricting condition setting section (location determining section) 20.

The configuration of the cameras 1a and 1b is discussed first. Each of the CMOS image sensors 12a and 12b is a block termed imager, which converts an image being picked up into an electric signal, i.e. converts input light into an electric signal. Each of the CMOS image sensors 12a and 12b includes a lens and iris section for image formation. Each of the CMOS image sensors 12a and 12b may be made up of another type of solid image pickup device such as CCD or an image pickup tube.

The image pickup controlling sections 13a and 13b are blocks for controlling the image pickup operation of the CMOS image sensors 12a and 12b and processing image signals of images picked up by the CMOS image sensors 12a and 12b. Each of the image pickup controlling sections 13a and 13b is made up of, for instance, a CPU (Central Processing Unit), and includes: an AGC (Automatic Gain Control) which automatically controls the gain of an analog signal of an image picked up by the CMOS image sensor 12a/12b; an A/D conversion section which converts the image data in the form of the analog signal to a digital signal; a synchronous clock generator which generates a synchronous clock which functions as the basis for the operations performed in the camera 1a/1b; a timing generator which generates, in accordance with the synchronous clock signal, a timing signal which determines the timings of operations performed in the CMOS image sensor 12a/12b and the A/D converter; a communication section which communicates with the controller 3 via the image-pickup communications network 2; and a buffer memory which adjusts the data transfer rate in accordance with the communication rate of the communication section.

Note that, it is also preferable that the communication section preferably performs wireless communications based on the standards such as IEEE802.11b, Bluetooth®, and infrared communications.

In addition to the above, the image pickup controlling sections 13a and 13b control the lenses and irises provided in the CMOS image sensors 12a and 12b, instruct the timing generator to start the picture taking, control the shutter speed, and control the intervals between the releasing of the shutter on the occasion of serial image pickup. These controls are performed based on instruction data supplied from the controller 3.

Each of the GPS/LPS sections 21a and 21 b detects and specifies an absolute/relative location of the camera 1a/1b. GPS is a known technology for figuring out a current location by analyzing the conditions (e.g. waveforms, timings, and intensities) of radio waves supplied from a plurality of satellites. LPS is a known technology for figuring out a current location by analyzing the conditions (e.g. waveforms, timings, and intensities) of radio waves supplied from a plurality of transmitters set up in a predetermined area.

A simpler configuration of the GPS/LPS sections 21a and 21b is such that only the distance from one transmitter is measured in accordance with the intensity of a radio wave supplied from the transmitter.

Being similar to the GPS/LPS sections 21a and 21b, the non-contact ID-chip reading sections 22a and 22b also detect and specify current locations of the cameras 1a and 1b. Each of the non-contact ID-chip reading sections 22a and 22b detects a radio wave which includes transmitter ID (identification) information and is supplied from an ID-chip (transmitter) provided in the vicinity of the non-contact ID-chip reading sections 22a and 22b, thereby specifying where the ID-chip is provided and detecting the location of the non-contact ID-chip reading section itself. The ID-chip can be provided in an inconspicuous place such as the inside of an wall, as long as the non-contact ID-chip reading section can receive a radio wave therefrom.

In the present embodiment, each of the cameras 1a and 1b includes both the GPS/LPS section 21a/21b and the non-contact ID chip reading section 22a/22b. These sections, however, both have the function to detect the location of the camera in accordance with the states of received waves that are different from each other, and hence either one of them can be omitted.

### [3. Configuration of Controller]

Now, the configuration of the controller 3 is discussed.

The operation controlling section 17 is an information processing block which determines whether or not the location of the camera 1a/1b is inside a predetermined area, by comparing the self-location detected by the camera 1a/1b (by the GPS/LPS section 21a/21b or the non-contact ID-chip reading section 22a/22b) with the predetermined area (condition) set by the operation restricting condition setting section 20. The operation controlling section 17 is implemented by, for instance, a CPU.

If it is determined that the self location is outside the predetermined area, the operation controlling section 17 sends instruction data to the image pickup controlling section 13a/13b via the image-pickup communications network 2, so as to restrict the image pickup operation of the camera 1a/1b. For instance, the camera 1a/1b is ordered not to accept the instruction to pick up an image from the user, or ordered to stop the power supply to the CMOS image sensor 12a/12b.

Instead of directly giving an order to the camera 1a/1b, the operation controlling section 17 can indirectly restrict the image pickup operation of the camera 1a/1b by causing the below-mentioned output conversion section 18 and the communication section 19 to perform a mosaic process on image data supplied from the camera 1a/1b, to delete (discard) the image data, or to convert the image data to solid-black or solid-white image, so as to invalidate the image data.

The operation controlling section 17 preferably has such a function that an authorized user is identified in reference to various types of ID information, and the restriction to the image pickup operation is lifted in accordance with the result of the identification. For instance, the operation controlling section 17 stores, in advance, ID numbers for identifying authorized users, obtains the ID number that the user inputs using, for instance, a mobile phone, via the below-mentioned communication section 19, and determines whether or not the obtained ID number matches the stored ID numbers. If it is determined that there is a match, i.e. if the user inputted valid ID information, the operation controller section 17 does not restrict the image pickup operation, irrespective of the results of detections by the GPS/LPS section 21a/21b and the non-contact ID-chip reading section 22a/22b.

According to this arrangement, an authorized user can perform the image taking without the restriction, even if the network camera 4 has been moved. The ID information may be a password which is a combination of characters, numerals and symbols, or biometric information such as fingerprint and voiceprint. As a matter of course, an appropriate input interface is required when the biometric information is utilized.

The output conversion section 18 is a block for converting the image data, supplied from the camera 1a/1b, to a format suitable for digital communications, such as MPEG (Moving Picture Experts Group) format.

Note that, the output conversion section 18 can convert a format of the image data supplied from the camera 1a/1b to a format corresponding to external display means. For instance, the output conversion section 18 can convert a format of the image data to an NTSC format suitable for the input to televisions or to an RGB format suitable for the input to computer monitors. In particular, the RGB format excels in a color separation property, and is hence suitable for high-quality image reproduction.

The communication section 19 is a communication interface for the communication with an external device, and is made up of a modem, a terminal adopter, and the like. As the need arises, the communication section 19 transmits the image data, which has been converted by the output conversion section 18, to the center 6 (see Fig. 2) via the communications network 5. Also, the communication section 19 receives various types of data from the center 6.

The operation restricting condition setting section 20 is a block which in advance (i) designates locations where the cameras 1a and 1b should be placed, as designated locations, and (ii) stores the result of the designation. Examples of the designated locations are: "within R (meters) radius of a point A", and "at a latitude in the range between X1 and X2 and at a longitude in the range between Y1 and Y2".

Note that, the blocks such as the operation controlling section 17, the output conversion section 18, and the operation restricting condition setting section 20 can be implemented by a CPU executing and processing appropriate software, and peripheral circuits of the CPU. In conjunction with the cameras 1a and 1b and the communication section 19, these blocks convert input light and obtain image data.

The configuration of the network camera 4 made up of the cameras (image-pickup-side devices) 1, the image-pickup communications network (wireless communication) 2, and the controller (control-side device) has been described above. According to this configuration, with a simple structure, it is possible to provide a lot of low-cost cameras 1 and centrally manage these cameras by the controller 3. On this account, it is possible to perform the image pickup in large numbers of areas, with a lower cost.

Note that, as in the description regarding Fig. 2, the following arrangement may be adopted instead of the network camera 4: one camera 11, an image-pickup communications network (NW) 2', and a controller 3' are connected to a center 6.

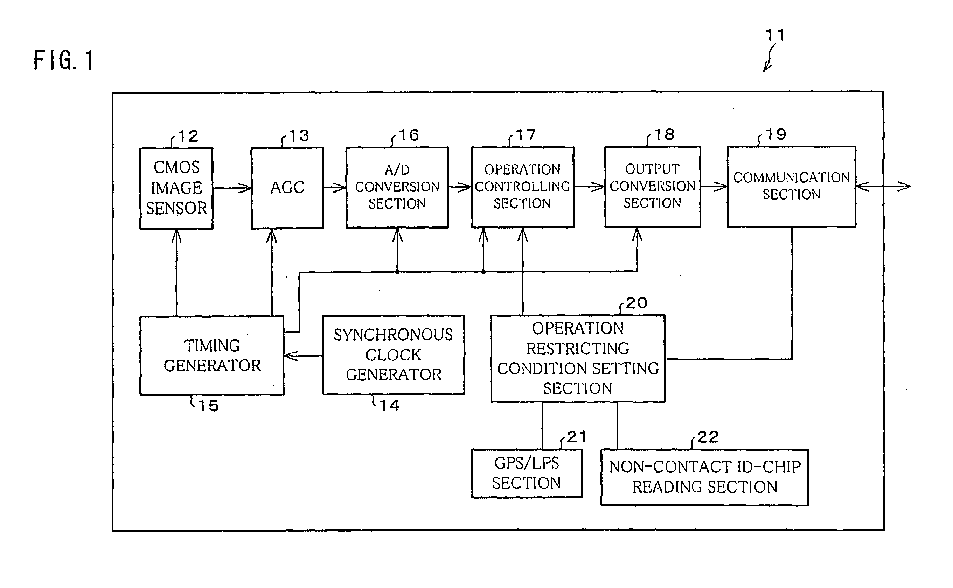

Also, a camera in which the cameras 1 and the controller 3 are integrally stored in a housing may be adopted. For instance, in a case illustrated in Fig. 1, a camera 11 includes: a CMOS image sensor 12; an AGC 13; a synchronous clock generator 14; a timing generator 15; an A/D conversion section 16; an operation controlling section 17; an output conversion section 18; a communication section 19; an operation restricting condition setting section 20; a GPS/LPS section 21; and a non-contact ID-chip reading section 22. Details of these components, including those having new reference numbers, of the camera 11 are identical with the aforesaid cameras 1 and the controller 3, so that the descriptions thereof are omitted.

Since the camera 11 can perform all functions that the cameras 1 and the controller 3 can do, the controller 3' connected by the image-pickup communications network 2' (which may be wired/wireless LAN or a single signal line, as in the case of the aforesaid image-pickup communications network 2) has a function of transferring, to the center 6, image data supplied from the camera 11. Alternatively, the camera 11 may directly communicate with the center 6, without the intermediary of the controller 3'.

### [4. Operation Flow of System]

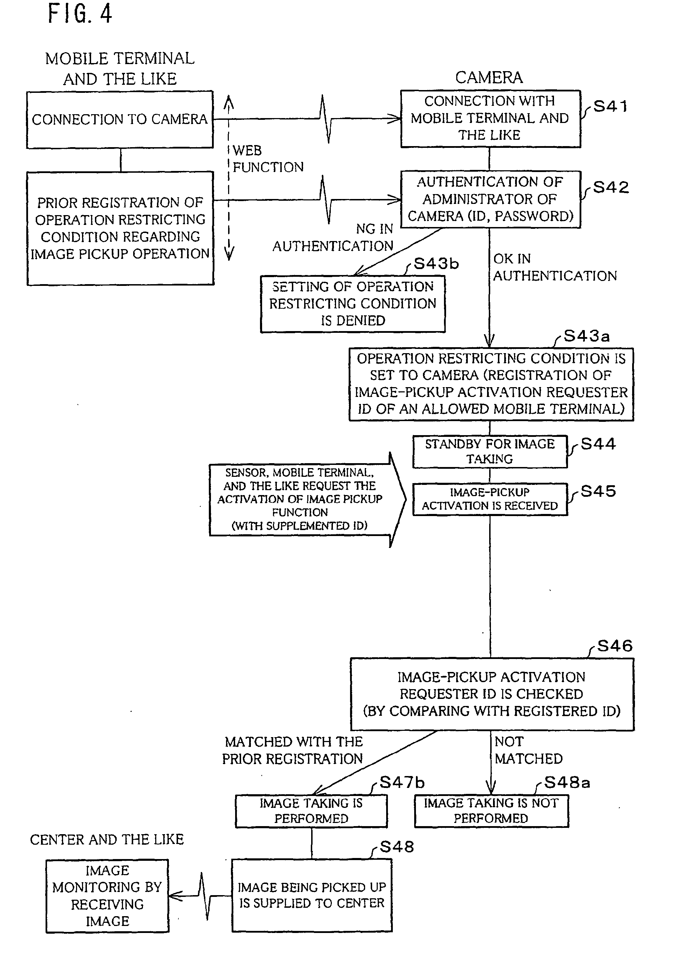

Now, the flow of the operation of the present image monitoring system will be discussed in reference to Figs. 4-6.

Fig. 4 is a flowchart, showing an example of the flow of the operation when the network camera 4 or the camera 11 (hereinafter, abbreviated to "camera") detects the location of itself (abbreviated to "self-location" at times).

In this example, the alteration of various settings of the camera and the request of the activation of an image-pickup (image pickup) function can be made via a mobile phone and a PDA (Personal Digital Assistant) (hereinafter, these equipments are termed "mobile terminal"). When the present image monitoring system is used as a security system, for instance, a vibration sensor attached to an window may request the camera to activate the image-pickup function.

In the present example, the aforesaid settings are registered and the communication with the camera are performed by utilizing a web (browsing) function of the mobile terminal. Also, the operation controlling section 17 (authorized user identification information storing section, user identification section) obtains the ID information or a password from the user, so as to identify an authorized user.

The flow of the operation on the camera side is described step by step.

When the connection with a mobile terminal is performed (Step (hereinafter, S) 41), the camera side obtains ID information or a password from the user (administrator of the camera), and identifies (determines) if he/she is an authorized user. In doing so, the ID information or the password may be obtained from the mobile terminal or inputted through a numeric keypad which is, if required, provided on the camera. As a result of the aforesaid identification, if the user is determined as an authorized user (i.e. determined as OK), the operation goes to the next step (i.e. goes to S43a). If the user is determined as an unauthorized user (i.e. determined as NG), the setting of the restriction to the operation of the camera is denied, and the operation terminates (S43b).

Next, the operation restricting condition supplied from the mobile terminal is registered in the camera (operation restricting condition setting section 20) (S43a). In this step, an image-pickup activation requester ID (e.g. the phone number of the requester) is registered for specifying an authorized mobile terminal (image-pickup activation requester). With this, an instruction from a particular mobile terminal is always judged as an instruction from an authorized user, without the input and supply of ID information or a password each time the user requires the activation of image-pickup function.

Subsequently, the camera becomes on standby for the image taking (S44). If a request for activating the image-pickup function is supplied from various sensors or the mobile terminal, the camera receives the request. The various sensors, the mobile terminal, and the like supply the image-pickup activation requester ID to the camera, in addition to the request. The camera verifies and checks the received image-pickup activation requester ID against the ID having been registered in S43a (S46). As a result of the check, if the received ID does not correspond to the registered ID, the camera (operation controlling section 17) performs a determination in line with the aforesaid current location and a restriction of the image pickup operation corresponding to the determination, and causes the image taking not to be performed (S47a).

If, as a result of the check, the received image-pickup activation requester ID corresponds to the ID which has been registered in advance in S43a, the camera interprets that the aforementioned image pickup activation request is a forcible order from an authorized user, and hence starts the image taking (S47b) and supplies images, which are picked up by the camera, to the center 6 (cf. Fig. 2) (S48). Following the above, the center 6 and the monitoring center 7 (hereinafter, collectively termed "center") perform the image monitoring by receiving the images being picked up.

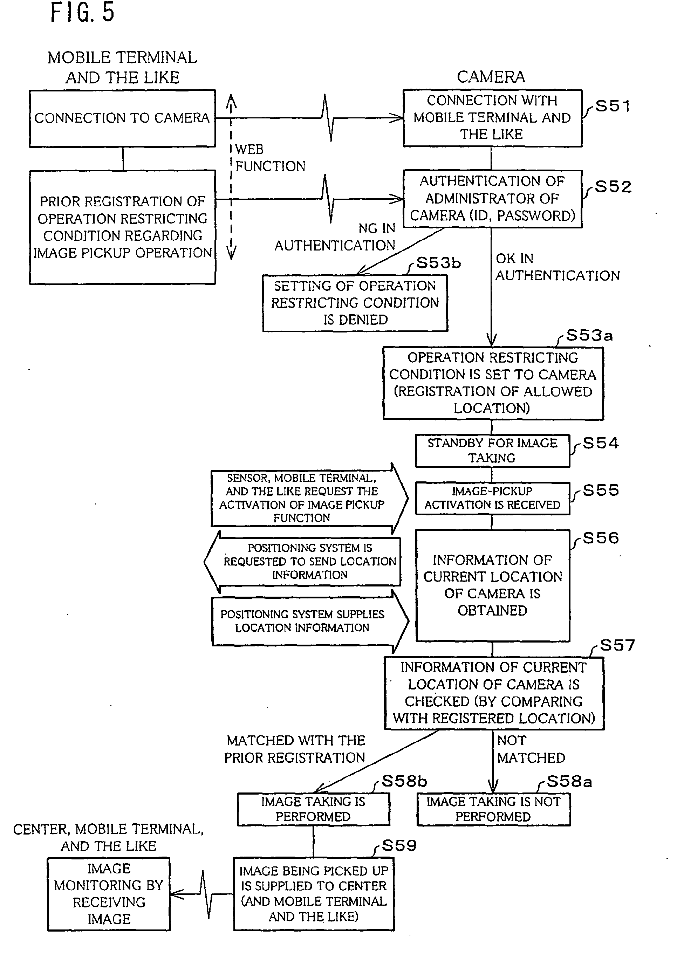

Fig. 5 is a flowchart showing an example of the operation for making an inquiry (requesting the calculation for determining location information) at an external positioning system (e.g. an information processing system which assists a part of the calculation which is required for allowing the GPS/LPS section 21a/21b to determine a current location), when the camera detects the self-location.

The processes performed by the camera in S51-55 in Fig. 5 are identical with the aforesaid S41-45. In the present example, after receiving the request for activating the image pickup function (S55), the camera requests an external positioning system (not limited to the aforesaid mobile terminal) to send location information to the camera (S56). Then the camera (operation controlling section 17), which has received the location information supplied from the positioning system in response to the request, determines (checks) if a current location (self-location) is inside a predetermined area (registered area) (S57). If it is determined that the current location is outside of the predetermined area (i.e. the current location does not correspond to the registered area), the camera (operation controlling section 17) restricts the image pickup operation, and causes the image taking not to be performed (S58a).

If it is determined that the current location is inside of the predetermined area (i.e. the current location corresponds to the registered area), the camera starts the image pickup operation in accordance with the image pickup activation request (S58b), and supplies the images being picked up to the center 6, the mobile terminal, and the like (S59). Following the above, the center, the mobile terminal, and the like perform the image monitoring by receiving the images being picked up.

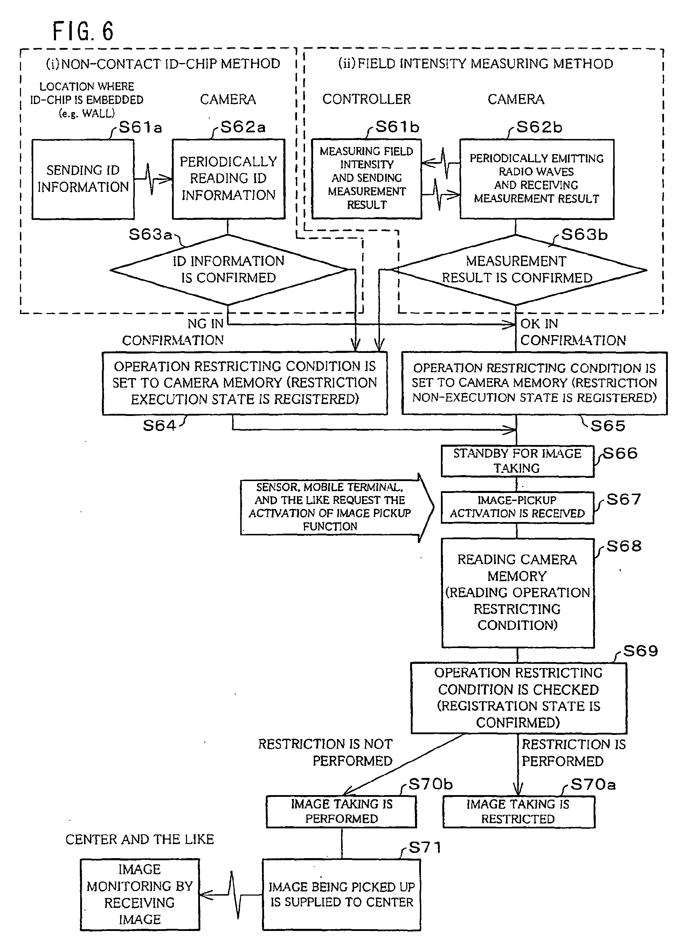

Fig. 6 is a flowchart showing the flows of operations which are performed (i) when the camera detects the self-location by a non-contact ID-chip method (i.e. the self-location is detected using non-contact ID-chip reading section 22a/22b) and (ii) when the camera detects the self-location by a field intensity measuring method.

### (i) Non-Contact ID-Chip Method

An ID-chip which is, for instance, embedded in an wall supplies ID information (S61a). The camera side periodically reads the ID information supplied from the ID chip (S62a). Then the camera confirms the self-location in reference to the ID information having been read (S63a), and sets an operation restricting condition in line with the result of the confirmation. That is to say, if valid ID information is not recognized in S63a (i.e. NG in S63a), the camera judges that the self-location is outside of a predetermined area, and registers (to the operation restricting condition setting section 20) the content of the judgment (i.e. the restriction of the image pickup operation is required), as a restriction execution state (S64). In the meantime, if valid ID information is recognized in S63a (i.e. OK in S63a), the camera judges that the self-location is inside of the predetermined area, and registers (to the operation restricting condition setting section 20) the content of the judgment (i.e. the restriction of the image pickup operation is not required), as a restriction non-execution state (S65).

### (ii) Field Intensity Measuring Method

According to the field intensity measuring method, when wireless communications are performed between the camera and the controller 3 or 3' (hereinafter, simply referred to as "controller"), the change of the distance therebetween is identified by detecting the intensity of a radio wave received by the camera or the controller, without using an ad-hoc self-location detecting section such as the GPS/LPS sections 21a and 21b and the non-contact ID-chip reading sections 22a and 22b. When this method is adopted, the aforesaid predetermined area is defined in accordance with the distance between the camera and the controller, and the self-location of the camera is judged so as to be in the outside of the predetermined area when the distance between the camera and the controller is not less than a predetermined value. For instance, in Fig. 2, the field intensity measuring method is carried out by measuring the intensity of a radio wave received by the camera 1a/1b and the controller 3 (in the case of the image pickup communications network 2) or the intensity of a radio wave received by the camera 11 or the controller 3' (in the case of the image-pickup communications network 2'). Actual steps for the above are performed as below.

The controller measures the field intensity regarding wireless communications with the camera, and supplies the result of the measurement to the camera (S61b). The camera side communicates with the controller by periodically emitting waves, and receives the aforesaid result of the measurement (S62b). Subsequently, the camera confirms the self-location by examining the received result of the measurement (i.e. comparing the received field intensity with a predetermined value) (S63b), and sets an operation restricting condition in reference to the content of the examination.

That is to say, if, in S63b, the result of the measurement reveals that the intensity of the received radio wave is less than the predetermined value (i.e. NG in S63b), the camera judges that the self-location is outside of the predetermined area, and registers (to the operation restricting condition setting section 20) the content of the judgment (i.e. the restriction of the image pickup operation is required), as a restriction execution state (S64). In the meantime, if, in S63b, the result of the measurement reveals that the intensity of the radio wave is not less than the predetermined value (OK in S63b), the camera judges that the self-location is inside of the predetermined area, and registers (to the operation restricting condition setting section 20) the content of the judgment (i.e. the restriction of the image pickup operation is not required), as a restriction non-execution state (S65).

The steps after S65 are common to (i) the non-contact ID-chip method and (ii) the field intensity measuring method. The camera becomes on standby (S66), and if a request for activating the image-pickup function is supplied from various sensors or the mobile terminal, the camera receives the request (S67). Subsequently, from a camera memory (operation restricting condition setting section 20), the camera reads the aforesaid operation restricting condition which was registered in S64 and S65 (S68), and checks the content of the condition (S69). As a result of the check, if the restriction execution state was registered, the camera (operation controlling section 17) restricts the image pickup operation, and prohibits the image taking (S70a).

As a result of the check, if the restriction non-execution state was registered, the camera starts the image pickup operation (S70b) and supplies an image being picked up to the center 6 (see Fig. 2) (S71). With this image, the image monitoring is performed in the center and the like.

In reference to Figs. 4-6, the flows of the operations of the present image monitoring system have been discussed as above. According to the present image monitoring system, the GPS/LPS section 21a/21b or the non-contact ID-chip reading section 22a/22b detects the self-location of the camera, the operation controlling section 17 judges whether or not the detected self-location is inside of the predetermined area, and if the self-location is judged so as to be in the outside of the predetermined area, the image pickup operation of the camera is restricted. On this account, when the camera is moved to the outside of the predetermined area, the image pickup operation of the image pickup section of the camera is restricted.

This prohibits the image taking if the camera is moved to the outside of the area where the camera should be located. On this account, it is possible to prevent improper use of the camera such as sneak shot and other privacy infringing use, e.g. a photographic object which is not expected by the user (administrator) is shot by the camera. Moreover, when stolen, the camera is caused to be incapable of performing the image pickup, and hence the risk of theft and improper use can be reduced.

To translate the present invention into a method of controlling an image pickup equipment in accordance with the aforesaid flows of operations, the method includes the following steps of: self-location detection for detecting the self-location; area determination for determining whether or not the self-location detected in the self-location detection is inside of a predetermined area; image pickup operation restriction for restricting the image pickup operation of an image pickup section which converts light which enters to the image pickup equipment so as to obtain image data of an image having been taken, when the area determination proves that the self-location is outside of the predetermined area.

Note that, the network camera 4 and the camera 11 may be structured to be identical with a typical computer, i.e. the network camera 4 and the camera 11 may include a processing device (CPU) for processing various types of data, a storing device which stores various types of data, and a communication device with which data communications with another terminal are performed. In this case, the functions and operations of the network camera 4 and the camera 11 can be performed by executing, by the processing device, a program stored in the storing device.

Aforesaid program may be read from a removable medium such as a CD-ROM and then executed, or may be read out from a hard disk and then executed. Alternatively, the program may be downloaded via a communications network such as the Internet, installed in a hard disk and the like, and then executed.

It is also noted that the image pickup equipment of the present invention is not limited to an optical camera which is exclusively used for the image taking, so that the image pickup equipment can be used for various purposes. The image pickup equipment of the present invention may therefore be a mobile phone embedded with a digital camera.

As described above, an image pickup equipment of the present invention is characterized by comprising: an image pickup section which converts input light so as to obtain image data; a self-location detecting section which detects a location of the image pickup equipment; a location determining section which determines whether or not the location detected by the self-location detecting section is inside of a predetermined area; and an image pickup operation restricting section which restricts an image pickup operation of the image pickup section when the location determining section determines that the location is outside of the predetermined area.

On this account, the image pickup operation of the image pickup equipment is restricted when the image pickup equipment is moved to the outside of a predetermined area.

With this, the image taking is prohibited when the image pickup equipment is moved to the outside of an area where the image pickup equipment should be located. On this account, it is possible to prevent improper use of the image pickup equipment such as sneak shot and other privacy infringing use, e.g. a photographic object which is not expected by the user (administrator) is shot by the image pickup equipment. Moreover, when stolen, the image pickup equipment is caused to be incapable of performing the image taking, and hence the risk of theft and improper use can be reduced.

As described above, in the aforesaid image pickup equipment, the self-location detecting section detects the location in accordance with states of received waves.

According to the above, the self-location detecting section receives various types of waves such as radio waves, supersonic waves, and infrared light, and detects the self-location of the image pickup equipment, in accordance with the state of receipt of the foregoing wave, e.g. intensity, waveform, frequency, and interference state.

In addition to the effects above, the image pickup equipment can detect the self-location wherever the waves can be received, and if the image pickup equipment is moved to the outside of an area where the image pickup equipment should be located, the image taking can be restricted.

As described above, in the aforesaid image pickup equipment, the self-location detecting section detects the location in accordance with states of the received radio waves that are different from each other.

According to this arrangement, the image pickup equipment can detect the self-location in accordance with the states of at least two received waves having different frequencies or waveforms. On this account, highly precise detection of the location can be performed in accordance with trigonometrical survey and the interference state of the waves. A typical example of this arrangement is GPS.

In addition to the effects above, the self-location is highly precisely detected, and the restriction of the image taking can be properly performed.

As described above, the aforesaid image pickup equipment further comprises: an authorized user identification information storing section which stores authorized user identification information; and a user identification section which determines whether or not user identification information obtained from a user matches the authorized user identification information, the image pickup operation restricting section not restricting the image pickup operation of the image pickup section whenever the user identification section determines that the user identification information obtained from the user matches the authorized user identification information.

According to this arrangement, the user identification information indicates unique information for identifying users. Examples of the user identification information include a password which is a combination of characters, numerals and symbols, and biometric information such as fingerprint and voiceprint.

According to the arrangement above, the authorized user identification information is stored in the authorized user identification information storing section in advance, and it is determined if the authorized user identification information matches user identification information obtained from the user. If there is a match, i.e., if the user identification information obtained from the user is authorized one, the image pickup restricting section does not restrict the image pickup operation of the image pickup section, irrespective of the current location (self-location) of the image pickup equipment.

With this, in addition to the effects above, the authorized user can always perform the image taking with no restrictions, even if the image pickup equipment is moved to the outside of the predetermined area.

As described above, in the foregoing image pickup equipment of the present invention, (i) an image-pickup-side device including the image pickup section and the self-location detecting section and (ii) a control-side device including the location determining section and the image pickup restricting section are provided as different devices, and the image-pickup-side device and the control-side device are connected to each other over wireless communications.

According to this arrangement, in addition to the effects above, the structure is simplified and a great number of low-cost image-pickup-side devices can be provided, and these image-pickup-side devices can be centrally controlled by the control-side device. On this account, images of a lot of areas can be taken with lower costs.

As described above, an image pickup system of the present invention is made up of the aforesaid image pickup equipment and a server computer which receives image information from the image pickup equipment.

With this, in addition to the effects above, the information of the image taken by the image pickup equipment can be used by a remote server computer.

As described above, a method of controlling the image pickup equipment of the present invention is characterized by comprising the steps of: (i) detecting a location of the image pickup equipment; (ii) determining whether or not the location detected in the step (i) is inside of a predetermined area; and (iii) if it is determined in the step (ii) that the location is outside of the predetermined area, restricting an image pickup operation of an image pickup section which is provided in the image pickup equipment and obtains image data by converting input light.

Therefore, when the image pickup equipment is moved to the outside of the predetermined area, the image pickup operation of the image pickup section of the image pickup equipment is restricted.

With this, the image taking is prohibited when the image pickup equipment is moved to the outside of an area where the image pickup equipment should be located. On this account, it is possible to prevent improper use of the image pickup equipment such as sneak shot and other privacy infringing use, when, for instance, the image pickup equipment is stolen. Moreover, according to the method of the present invention, when the image pickup equipment is stolen, the image pickup equipment is caused to be incapable of performing the image taking, and hence the risk of theft and improper use can be reduced.

As described above, the method of the present invention is arranged in such a manner that, in the step (i), the location is detected in accordance with states of received waves.

According to this method, various types of waves such as radio waves, supersonic waves, and infrared light are received in the step (i), and the self-location of the image pickup equipment is detected in accordance with the state of receipt of the foregoing wave, e.g. intensity, waveform, frequency, and interference state.

With this, in addition to the effects above, the image pickup equipment can detect the self-location wherever the waves can be received, and if the image pickup equipment is moved to the outside of an area where the image pickup equipment should be located, the image taking can be restricted.

As described above, the method of the present invention is arranged in such a manner that, in the step (i), the location is detected in accordance with states of received waves that are different from each other.

According to this method, the image pickup equipment can detect the self-location in accordance with the states of at least two received waves having different frequencies or waveforms. On this account, highly precise detection of the location can be performed in accordance with trigonometrical survey and the interference state of the waves.

With this, in addition to the effects above, the self-location is detected further precisely and the restriction of the image taking can be properly performed.

As described above, the method of the present invention further comprises the steps of: (a) storing authorized user identification information; and (b) determining whether or not user identification information obtained from a user matches the authorized user identification information, in the step (iii), whenever it is determined in the step (b) that the user identification information obtained from the user matches the authorized user identification information, the image pickup operation of the image pickup section not being restricted.

According to this method, in the step (b), it is determined whether or not the authorized user identification information stored in advance in the step (a) matches the user identification information obtained from the user. If it is determined that there is a match, i.e. if the user identification information obtained from the user is authorized one, the image pickup operation of the image pickup section is not restricted in the step (iii), irrespective of the current location (self-location) of the image pickup equipment.

With this, in addition to the effects above, the authorized user can always perform the image taking with no restrictions, even if the image pickup equipment is moved to the outside of the predetermined area.

A control program for controlling an image pickup equipment of the present invention causes a computer to function as the sections of the image pickup equipment.

With this, the aforesaid image pickup equipment can be realized.

A computer-readable storage medium storing a program for controlling an image pickup equipment of the present invention stores a controlling program which causes a computer to function as the sections of the image pickup equipment.

With the program which is read out from the storage medium and controls the image pickup equipment, the image pickup element can be implemented by a computer.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

### INDUSTRIAL APPLICABILITY

According to the present invention, an image pickup equipment, an image pickup system, a method and program for controlling the image pickup equipment, and a storage medium storing the program, which can realize the following effects, are provided: The image taking is prohibited when the image pickup equipment is moved to the outside of an area where the image pickup equipment should be set up. Therefore, it is possible to prevent the camera from being abused for improper use such as sneak shot and other privacy infringing purposes. Also, the image pickup equipment is unusable when being stolen, so that risk of theft and improper use can be reduced.

With this, it is possible to prevent the improper use of the image pickup equipment which was, for instance, stolen.

## Claims

1. An image pickup equipment, **characterized by** comprising:
an image pickup section which converts input light so as to obtain image data;
a self-location detecting section which detects a location of the image pickup equipment;
a location determining section which determines whether or not the location detected by the self-location detecting section is inside of a predetermined area; and
an image pickup operation restricting section which restricts an image pickup operation of the image pickup section when the location determining section determines that the location is outside of the predetermined area.

2. The image pickup equipment as defined in claim 1, wherein, the self-location detecting section detects the location in accordance with a state of one or more received waves.

3. The image pickup equipment as defined in claim 2, wherein, the self-location detecting section detects the location in accordance with states of the received waves that are different from each other.

4. The image pickup equipment as defined in any one of claims 1-3, further comprising:
an authorized user identification information storing section which stores authorized user identification information; and
a user identification section which determines whether or not user identification information obtained from a user matches the authorized user identification information,
the image pickup operation restricting section not restricting the image pickup operation of the image pickup section whenever the user identification section determines that the user identification information obtained from the user matches the authorized user identification information.

5. The image pickup equipment as defined in any one of claims 1-4, wherein, (i) an image-pickup-side device including the image pickup section and the self-location detecting section and (ii) a control-side device including the location determining section and the image pickup operation restricting section are provided as different devices, and the image-pickup-side device and the control-side device are connected to each other over wireless communications.

6. An image pickup system, **characterized by** comprising:
the image pickup equipment defined in any one of claims 1-5; and
a server computer which receives image information from the image pickup equipment.

7. A method of controlling an image pickup equipment, **characterized by** comprising the steps of:
(i) detecting a location of the image pickup equipment;
(ii) determining whether or not the location detected in the step (i) is inside of a predetermined area; and
(iii) if it is determined in the step (ii) that the location is outside of the predetermined area, restricting an image pickup operation of an image pickup section which is provided in the image pickup equipment and obtains image data by converting input light.

8. The method as defined in claim 7, wherein, in the step (i), the location is detected in accordance with states of received waves.

9. The method as defined in claim 8, wherein, in the step (i), the location is detected in accordance with states of the received waves that are different from each other.

10. The method as defined in any one of claims 7-9, further comprising the steps of:
(a) storing authorized user identification information; and
(b) determining whether or not user identification information obtained from a user matches the authorized user identification information,
in the step (iii), whenever it is determined in the step (b) that the user identification information obtained from the user matches the authorized user identification information, the image pickup operation of the image pickup section not being restricted.

11. A control program for causing the image pickup equipment defined in any one of claims 1-5 to operate, the control program causing a computer to function as each of the sections of the image pickup equipment.

12. A computer-readable storage medium, storing the control program defined in claim 11.

## Amended claims

### Amended claims under Art. 19.1 PCT

**4.** The image pickup equipment as defined in any one of claims 1-3, further comprising:
an authorized user identification information storing section which stores authorized user identification information; and
a user identification section which determines whether or not user identification information obtained from a user matches the authorized user identification information,
the image pickup operation restricting section not restricting the image pickup operation of the image pickup section whenever the user identification section determines that the user identification information obtained from the user matches the authorized user identification information.

**5.** The image pickup equipment as defined in any one of claims 1-4, wherein, (i) an image-pickup-side device including the image pickup section and the self-location detecting section and (ii) a control-side device including the location determining section and the image pickup operation restricting section are provided as different devices, and the image-pickup-side device and the control-side device are connected to each other over wireless communications.

**6.** (amended) An image pickup system, **characterized by** comprising:
the image pickup equipment defined in any one of claims 1-5 and 13; and
a server computer which receives image information from the image pickup equipment.

**7.** A method of controlling an image pickup equipment, **characterized by** comprising the steps of:
(i) detecting a location of the image pickup equipment;
(ii) determining whether or not the location detected in the step (i) is inside of a predetermined area; and
(iii) if it is determined in the step (ii) that the location is outside of the predetermined area, restricting an image pickup operation of an image pickup section which is provided in the image pickup equipment and obtains image data by converting input light.

**8.** The method as defined in claim 7, wherein, in the step (i), the location is detected in accordance with states of received waves.

**9.** The method as defined in claim 8, wherein, in the step (i), the location is detected in accordance with states of the received waves that are different from each other.

**10.** The method as defined in any one of claims 7-9, further comprising the steps of:
(a) storing authorized user identification information; and
(b) determining whether or not user identification information obtained from a user matches the authorized user identification information,
in the step (iii), whenever it is determined in the step (b) that the user identification information obtained from the user matches the authorized user identification information, the image pickup operation of the image pickup section not being restricted.

**11.** (amended) A control program for causing the image pickup equipment defined in any one of claims 1-5 and 13 to operate, the control program causing a computer to function as each of the sections of the image pickup equipment.

**12.** A computer-readable storage medium, storing the control program defined in claim 11.

**13.** (added) The image pickup equipment as defined in any one of claims 1-5, wherein, the self-location detecting section detects the location of the image pickup equipment always before the image pickup operation in accordance with a request for image taking, and if the location determining section determines that the location is outside of the predetermined area, the image pickup operation restricting section restricts the image pickup operation of the image pickup section, always before the image taking in response to the request.

**14.** (added) The method as defined in any one of claims 7-10, wherein, in the step (i), the location of the image pickup equipment is detected always before the image pickup operation in accordance with a request for image taking, and in the step (iii), if it is determined in the step (ii) that the location is outside of the predetermined area, the image pickup operation of the image pickup section is restricted always before the image taking in response to the request.

**15.** (added) A sensor device, **characterized by** comprising:
a sensor section;
a self-location detecting section which detects a location of the sensor device;
a location determining section which determines whether or not the location detected by the self-location detecting section is inside of a predetermined area; and
an operation restricting section which restricts an operation of the sensor section if the location determining section determines that the location is outside of the predetermined area.

**16.** (added) A sensor system, **characterized by** comprising:
the sensor device defined in claim 15; and
a server computer which receives sensor information from the sensor device.

**17.** (added) A method of controlling a sensor device, **characterized by** comprising the steps of:
(i) detecting a location of the sensor device;
(ii) determining whether or not the location detected in the step (i) is inside of a predetermined area; and
(iii) if it is determined in the step (ii) that the location is outside of the predetermined area, restricting an operation of a sensor section of the sensor device.

**18.** (added) A control program for causing the sensor device defined in claim 15 to operate, the control program causing a computer to function as each of the sections of the sensor device.

**19.** (added) A computer-readable storage medium, storing the control program defined in claim 18.

Statement under Art. 19.1 PCT
1. Added claims 13 and 14 are **characterized in that** the self-location is detected always before the image pickup operation, whether or not the self-location is inside of a predetermined area is determined, and if it is determined that the self-location is outside of the predetermined area, the image pickup operation is restricted.

Reference Cited 1 (JP 11-136660A) discloses a cordless surveillance camera system which is arranged in such a manner that the power control is disabled, and when it is detected that the surveillance camera is moved from the location where the camera is installed, highly confidential information is deleted. With this system, improper use of a telephone can be prevented even if the camera is stolen.

According to Reference Cited 1, it is necessary to disable the power control and keep the power supply to be always on-state, in order to detect the move of the surveillance camera. Otherwise the move of the surveillance camera from the installation location cannot be detected in such a case that the power supply is turned off, the camera is moved, and then the power supply is turned on.

On the other hand, according to the image pickup equipment of the present invention, the self-location is detected always before the image pickup operation, then whether or not the self-location is inside of a predetermined area is determined, and the image pickup operation is restricted if it is determined that the self-location is outside of the predetermined area. This makes it possible to prevent a (e.g. stolen) image pickup equipment from being abused for improper use such as sneak shot and other privacy infringing purposes, even if the power supply is turned off, the equipment is moved, and then the power supply is turned on.

2. Added claims 15-19 are identical with claims 1, 6, 7, 11, and 12, except that *"image pickup equipment"* in claims 1, 6, 7, 11, and 12 are replaced with *"sensor device*".

The embodiment of the present invention takes the CMOS image sensor as an example of the image pickup section. On this account, it is clear that the present invention can be applied not only to the image pickup equipment but also to various types of sensor devices.
